# EUROPÄISCHE PATENTSCHRIFT

(11) **EP 2 111 523 B1**
(45) Veröffentlichungstag und Bekanntmachung des Hinweises auf die Patenterteilung: **04.03.2020**
(21) Anmeldenummer: 08707308.6
(22) Anmeldetag: 25.01.2008
(51) Int. Cl.: F25C 5/187, F25D 17/06

(54) **KÜHL- UND/ODER GEFRIERGERÄT**
REFRIGERATOR AND/OR FREEZER
APPAREIL DE RÉFRIGÉRATION ET/OU DE CONGÉLATION

(30) Priorität: 26.01.2007 DE 202007001202 U; 10.05.2007 DE 202007006732 U
(43) Veröffentlichungstag der Anmeldung: 28.10.2009
(73) Patentinhaber: Liebherr-Hausgeräte Ochsenhausen GmbH, 88416 Ochsenhausen (DE)
(72) Erfinder: JENDRUSCH, Holger, 88416 Ochsenhausen (DE); WIEST, Matthias, 88416 Ochsenhausen (DE); GRADL, Manfred, A-9781 Oberdrauburg (AT)
(74) Vertreter: Herrmann, Uwe
(86) Internationale Anmeldenummer: PCT/EP2008/000600
(87) Internationale Veröffentlichungsnummer: WO 2008/090002

(56) Entgegenhaltungen:
- EP-A- 1 482 263
- EP-A- 1 930 671
- JP-A- 11 223 444
- JP-A- 2002 340 455
- US-A- 3 359 751
- US-A- 3 659 429
- US-A1- 2006 266 059

## Beschreibung

Die vorliegende Erfindung betrifft ein Kühl- und/oder Gefriergerät mit einem Eisbereiter.

Kühl- und/oder Gefriergeräte mit einem Eisbereiter sind aus dem Stand der Technik in unterschiedlichen Ausführungen bekannt. Bei diesen Geräten ist zur Kühlung des Eisbereites ein eigens für diesen Zweck vorgesehener Luftkanal bzw. eine statische Luftführung im Gerät vorhanden, die einen Teil der Luft, die an sich zur Kühlung des Geräteinnenraums bzw. der darin eingelagerten Waren dient, dem Eisbereiter zuführt.

Bei aus dem Stand der Technik bekannten Geräten ist es von Nachteil, dass die dynamische Kühlung des Eisbereiters nur dann zur Verfügung steht, wenn sich das Gerät gerade im Kühlbetrieb befindet. Denkbar ist beispielsweise, dass das Gerät einen dynamischen Verdampfer aufweist, und dass ein Ventilator vorgesehen ist, der einem Kühlluftkreislauf zugeordnet ist und bei Bedarf die gewünschte Luftbewegung bewirkt. Ist der dem Kühlluftkreislauf zugeordnete Ventilator nicht im Betrieb, erfolgt auch keine dynamische Kühlung des Eisbereiters, auch wenn diese an sich erforderlich wäre. Somit erfolgt bei vorbekannten Geräten in der Stehzeit nur eine Kühlung des Eisbereiters über natürliche Konvektion, die wesentlich langsamer und damit ineffektiver ist als eine dynamische Kühlung.

Ein weiterer Nachteil bei aus dem Stand der Technik bekannten Geräten besteht darin, dass der Eisbereiter gegebenenfalls auch dann gekühlt wird, wenn dessen Kühlung nicht erforderlich ist. Ist beispielsweise der dem Kühlluftkreislauf zugeordnete Ventilator in Betrieb, wird bei vorbekannten Geräten auch gleichzeitig der Eisbereiter gekühlt. Daraus resultiert der Nachteil, dass in diesem Fall nicht die volle Luftleistung zur Kühlung der eingelagerten Waren zur Verfügung steht, was unerwünscht ist. Ein Kühl- und/oder Gefriergerät nach dem Oberbegriff des Anspruchs 1 ist aus US 2006/266059 bekannt.

Der vorliegenden Erfindung liegt daher die Aufgabe zugrunde, ein Kühl- und/oder Gefriergerät der eingangs genannten Art dahingehend weiterzubilden, dass die Eisbereitung unabhängig vom Betriebszustand des Gerätes erfolgt.

Diese Aufgabe wird gemäß Anspruch 1 dadurch gelöst, dass das Gerät wenigstens einen dem Eisbereiter zugeordneten Ventilator aufweist, der derart angeordnet ist, dass dem Eisbereiter mittels des Ventilators Kaltluft zugeführt wird. Die vorliegende Erfindung basiert somit auf dem Gedanken, dass ein separater, direkt dem Eisbereiter zugeordneter Ventilator eingesetzt wird, um diesen zu kühlen.

Gemäß der Erfindung ist vorgesehen, dass der dem Eisbereiter zugeordnete Ventilator derart ausgeführt ist, dass dessen Betriebszustand unabhängig von dem Betriebszustand des Kühl- und/oder Gefriergerätes ist. Die dynamische Belüftung bzw. Kühlung des Eisbereiters ist damit unabhängig davon, in welchem Betriebszustand (ein- oder ausgeschalteter Kompressor, ein- oder ausgeschalteter Ventilator des Kühlluftkreislaufes etc.) sich das Gerät befindet.

Denkbar ist, dass der dem Eisbereiter zugeordnete Ventilator permanent läuft oder nur dann, wenn ein Kühlluftbedarf bzw. ein Bedarf an Eis besteht.

In weiterer Ausgestaltung der Erfindung ist vorgesehen, dass das Gerät einen dynamisch gekühlten Verdampfer zur Kühlung des Geräteinnenraumes oder wenigstens eines Kompartimentes des Gerätes aufweist, dass ein dem Kühlluftkreislauf zugeordneter Ventilator vorgesehen ist, und dass der dem Eisbereiter zugeordnete Ventilator derart ausgeführt ist, dass dessen Betriebszustand unabhängig vom Betriebszustand des dem Kühlluftkreislauf zugeordneten Ventilators ist. Auf diese Weise ist es möglich, die Kühlung der in dem Gerät befindlichen Waren unabhängig davon zu gestalten, ob dem Eisbereiter Kaltluft zugeführt werden muss oder nicht. Ferner ist es möglich, den Eisbereiter mit Kühlluft unabhängig davon zu versorgen, ob nun der dem Kühlluftkreislauf zugeordnete Ventilator in Betrieb ist oder nicht.

In weiterer Ausgestaltung der Erfindung ist vorgesehen, dass das Gerät einen Kompressor aufweist und dass der dem Eisbereiter zugeordnete Ventilator derart ausgeführt ist, dass dessen Betriebszustand unabhängig vom Betriebszustand des Kompressors ist.

In weiterer Ausgestaltung der Erfindung ist vorgesehen, dass der dem Eisbereiter zugeordnete Ventilator derart ausgeführt ist, dass er in Betrieb ist, solange der gewünschte oder der maximale Füllstand in der Eiswürfelauffangschale nicht erreicht ist. In diesem Ausführungsbeispiel der Erfindung wird der Eisbereiter durch den separat ihm zugeordneten Ventilator mit kalter Luft dynamisch gekühlt. Dies führt zu einer wesentlichen Erhöhung der Eisausbringung.

Gemäß der Erfindung ist vorgesehen, dass das Gerät abweichend von den aus dem Stand der Technik bekannten Geräten keinen nur dem Eisbereiter zugeordneten Luftkanal aufweist. Wie oben ausgeführt, kann bei aus dem Stand der Technik bekannten Geräten ein Luftführungskanal vorgesehen sein, durch den Kaltluft dem Eisbereiter zugeführt wird. Da gemäß der vorliegenden Erfindung ein separater, dem Eisbereiter zugeordneter Ventilator vorgesehen ist, kann auf einen solchen separaten Luftkanal verzichtet werden, was den Geräteaufbau entsprechend vereinfacht.

In einer weiteren Ausgestaltung der Erfindung ist vorgesehen, dass der Eisbereiter über ein Gehäuse verfügt und das der dem Eisbereiter zugeordnete Ventilator an dem Gehäuse angeordnet ist oder zumindest teilweise einen integralen Bestandteil des Gehäuses bildet. Denkbar ist beispielsweise, dass bestimmte Bestandteile des Ventilators, beispielsweise Luftzuführungen oder Luftabführungen integrale Bestandteile des Gehäuses sind, wodurch sich ein vergleichsweise einfacher Aufbau der Anordnung ergibt.

Gemäß der Erfindung ist schließlich vorgesehen, dass das Gerät Mittel zur Erfassung des Füllstandes des Eisbereiters oder eines Eisbehälters aufweist, die derart angeordnet sind, dass sie den Füllstand in dem Eisbereiter oder in dem Eisbehälter messen, und dass die Drehzahl und/oder die relative Einschaltdauer des Ventilators von dem gemessenen Füllstand abhängt. Unter der relativen Einschaltdauer ist das Verhältnis aus Einschaltzeit zur Ausschaltzeit des dem Eisbereiter zugeordneten Ventilators zu verstehen.

Weiterhin kann vorgesehen sein, dass der Eiswürfelbereiter und der diesem zugeordnete Ventilator eine bauliche Einheit bilden, wodurch sich eine vergleichsweise kompakte Anordnung ergibt.

Selbstverständlich sind von der Erfindung auch Geräte umfasst, die mehr als einen Eisbereiter aufweisen. Das Wort "ein" ist im Rahmen dieser Erfindung nicht als Beschränkung auf Ausführungsformen zu verstehen, bei denen die betreffende Komponente nur genau einmal vorgesehen ist.

In weiterer Ausgestaltung der Erfindung kann ein Betätigungselement, beispielsweise eine Taste vorgesehen sein, bei deren Betätigung der dem Eisbereiter zugeordnete Ventilator in Betrieb gesetzt wird und solange in Betrieb bleibt, bis ein bestimmter Füllstand, der einstellbar sein kann, im Eisbereiter bzw. in einem Eisbehältnis erreicht ist.

Weitere Einzelheiten und Vorteile der Erfindung werden anhand eines im Folgenden erläuterten Ausführungsbeispiels näher beschrieben.

Das Kühl- und/oder Gefriergerät gemäß der vorliegenden Erfindung weist einen Eiswürfelbereiter auf, mittels dessen eine möglichst schnelle Abkühlung des Wassers im Eiswürfelbereiter erreicht werden soll. Durch die schnellere Abkühlung kann das Auswurfintervall verkürzt und somit die Ausbringung pro Zeit erhöht werden.

Dazu ist gemäß diesem Ausführungsbeispiel vorgesehen, dass ein separater, nur dem Eiswürfelbereiter zugeordneter Ventilator vorgesehen ist, der diesen solange mit kalter Luft dynamisch kühlt, bis die gewünschte Menge an Eiswürfeln bzw. der gewünschte Füllstand in der Eiswürfelauffangschale erreicht ist. Dies führt zu einer wesentlich erhöhten Eisausbringung.

Weiterhin kann vorgesehen sein, dass die dynamische Belüftung mittels des dem Eiswürfelbereiter zugeordneten Ventilators nicht vom Betriebszustand des Gefriergerätes/Gefrierteils abhängt. Gemäß diesem Ausführungsbeispiel erfolgt die dynamische Belüftung somit sowohl in der Lauf- als auch in der Stehzeit des Gerätes. Beispielsweise kann vorgesehen sein, dass zur Kühlung des Gefrierteils bzw. Gefriergerätes ein dynamischer Verdampfer vorgesehen ist und dass der Betrieb des dem Eiswürfelbereiter zugeordneten Ventilators unabhängig von dem Betrieb des dem Kühlluftkreislauf zugeordneten Ventilators erfolgt.

Gemäß der Erfindung ist kein zusätzlicher statischer Luftkanal vorgesehen, um den Eiswürfelbereiter dynamisch zu kühlen.

Somit steht vorzugsweise die gesamte Luftleistung des Gerätes ausschließlich zur Kühlung der Waren bereit, die sich im Geräteinnenraum befinden.

Gemäß dem hier beschriebenen Ausführungsbeispiel ist ein Sensor vorgesehen, der den Füllstand im Eiswürfelbereiter bzw. im Eiswürfelfach ermittelt. Es besteht die Möglichkeit, den dem Eisbereiter zugeordneten Ventilator nur dann zu betreiben, wenn sich der Füllstand der Eiswürfelauffangschale unterhalb eines Sollwertes befindet. Ist der Soll-Füllstand nicht erreicht, kann vorgesehen sein, dass der dem Eiswürfelbereiter zugeordnete Ventilator in Betrieb gesetzt wird und solange eingeschaltet bleibt, bis der Soll-Füllstand erreicht ist.

Auch ist es denkbar, nicht die absolute oder relative Einschaltdauer sondern auch die Drehzahl des Ventilators entsprechend zu ändern.

Ein vergleichsweise einfacher Aufbau des erfindungsgemäßen Gerätes ergibt sich, wenn der Ventilator an einem Gehäuse angeordnet ist, in dem der Eiswürfelbereiter angeordnet ist bzw. das einen Teil des Eiswürfelbereiters darstellt. Dabei kann vorgesehen sein, dass bestimmte feststehende Teile des Ventilators, wie beispielsweise Luftzuführungen oder Luftabführungen integrale Bestandteile dieses Gehäuses bilden.

Es kann vorgesehen sein, dass sich in dem Gehäuse eine geeignete Aufnahme für den dem Eiswürfelbereiter zugeordneten Ventilator befindet, wobei der Ventilator beispielsweise mit dem Gehäuse verrastet oder auf sonstige Weise verbunden wird, beispielsweise durch eine Klebe- oder Schraubverbindung. Insgesamt ergibt sich eine vergleichsweise kompakte Anordnung, die als solche in das Gerät eingebaut werden kann.

## Patentansprüche

1. Kühl- und/oder Gefriergerät mit einem Kühlluftkreislauf zur Kühlung des Geräteinnenraums oder wenigstens eines Kompartiments des Gerätes und mit einem Eisbereiter, wobei
das Gerät wenigstens einen dem Eisbereiter zugeordneten Ventilator aufweist, der derart angeordnet ist, dass dem Eisbereiter mittels des Ventilators Kaltluft zugeführt wird, wobei,
der dem Eisbereiter zugeordnete Ventilator von einem dem Kühlluftkreislauf zugeordneten Ventilator separat ausgebildet ist und dem Eisbereiter direkt zugeordnet ist, **dadurch gekennzeichnet, dass** der dem Eisbereiter zugeordnete Ventilator derart ausgeführt ist, dass dessen Betriebszustand unabhängig von dem Betriebszustand des Kühl- und/oder Gefriergerätes ist, und
das Gerät keinen dem Eisbereiter zugeordneten separaten Luftkanal aufweist, und Mittel vorgesehen sind, mittels derer der Füllstand im Eisbereiter oder in einem Eisbehältnis erfassbar ist, und
die Drehzahl und/oder die relative Einschaltdauer des dem Eisbereiter zugeordneten Ventilators von dem gemessenen Füllstand abhängt.

2. Kühl- und/oder Gefriergerät nach Anspruch 1, **dadurch gekennzeichnet, dass** das Gerät einen dynamischen Verdampfer zur Kühlung des Geräteinnenraums oder wenigstens eines Kompartiments des Gerätes aufweist, dass ein dem Kühlluftkreislauf zugeordneter Verdampfer vorgesehen ist, und dass der dem Eisbereiter zugeordnete Ventilator derart ausgeführt ist, dass dessen Betriebszustand unabhängig vom Betriebszustand des dem Kühlluftkreislauf zugeordneten Ventilators ist.

3. Kühl- und/oder Gefriergerät nach einem der vorhergehenden Ansprüche, **dadurch gekennzeichnet, dass** das Gerät einen Kompressor aufweist und dass der dem Eisbereiter zugeordnete Ventilator derart ausgeführt ist, dass dessen Betriebszustand unabhängig vom Betriebszustand des Kompressors ist.

4. Kühl- und/oder Gefriergerät nach einem der vorhergehenden Ansprüche, **dadurch gekennzeichnet, dass** der dem Eisbereiter zugeordnete Ventilator derart ausgeführt ist, dass er nur bei Bedarf in Betrieb ist.

5. Kühl- und/oder Gefriergerät nach einem der vorhergehenden Ansprüche, **dadurch gekennzeichnet, dass** der Eisbereiter über ein Gehäuse verfügt und das der dem Eisbereiter zugeordnete Ventilator an dem Gehäuse angeordnet ist oder zumindest teilweise einen integralen Bestandteil des Gehäuses bildet.

6. Kühl- und/oder Gefriergerät nach einem der vorhergehenden Ansprüche, **dadurch gekennzeichnet, dass** der Eisbereiter und der diesem zugeordnete Ventilator eine bauliche Einheit bilden.

7. Kühl- und/oder Gefriergerät nach einem der vorhergehenden Ansprüche, **dadurch gekennzeichnet, dass** ein Bedienelement, insbesondere eine Taste vorgesehen ist, die derart ausgeführt ist, dass bei ihrer Betätigung der dem Eisbereiter zugeordnete Ventilator solange in Betrieb ist, bis ein bestimmter Füllstand im Eisbereiter oder in einem Eisbehältnis erreicht ist.

## Claims

1. Refrigerator and/or freezer with a cooling air circuit for cooling the interior of the appliance or at least one compartment of the appliance, and with an ice maker, wherein
the appliance comprises at least one fan associated to the ice maker which is arranged in such a way that cold air is supplied to the ice maker by means of the fan,
wherein the fan associated to the ice maker is formed separately from a fan associated to the cooling air circuit and is associated directly to the ice maker, **characterized in that**
the fan associated to the ice maker is configured such that its operating condition is independent of the operating condition of the refrigerator and/or freezer, and
the appliance has no separate air duct associated to the ice maker, and
means are provided, by means of which the filling level in the ice maker or in an ice container can be detected, and
the rotational speed and/or the relative switch-on period of the fan associated to the ice maker depends on the filling level measured.

2. Refrigerator and/or freezer according to any of the preceding claims, **characterized in that** the appliance comprises a dynamic evaporator for cooling the interior of the appliance or at least one compartment of the appliance, **in that** an evaporator associated with the cooling air circuit is provided, and that the fan associated with the ice maker is configured in such a way that its operated state is independent of the operating state of the fan associated with the cooling air circuit.

3. Refrigerator and/or freezer according to any one of the preceding claims, **characterized in that** the appliance comprises a compressor and that the fan associated to the ice maker is configured such that its operating condition is independent of the operating condition of the compressor.

4. Refrigerator and/or freezer according to any one of the preceding claims, **characterized in that** the fan associated to the ice maker is configured such that it only is in operation if necessary.

5. Refrigerator and/or freezer according to any of the preceding claims, **characterized in that** the ice maker has a housing and that the fan associated to the ice maker is arranged on the housing or at least partly forms an integral part of the housing.

6. Refrigerator and/or freezer according to any one of the preceding claims, **characterized in that** the ice maker and the fan associated to the same form a constructional unit.

7. Refrigerator and/or freezer according to any one of the preceding claims, **characterized in that** an operating element, in particular a key is provided, which is configured such that upon actuating the same the fan associated to the ice maker is in operation until a certain filling level in the ice maker or in an ice container is reached.

## Revendications

1. Appareil de réfrigération et/ou de congélation comprenant un circuit d'air de réfrigération destiné à réfrigérer l'espace intérieur de l'appareil ou au moins un compartiment de l'appareil et comprenant une machine à glaçons,
l'appareil comportant au moins un ventilateur associé à la machine à glaçons et disposé de telle manière que de l'air froid est alimenté dans la machine à glaçons au moyen du ventilateur,
le ventilateur associé à la machine à glaçons étant réalisé séparé d'un ventilateur associé au circuit d'air de réfrigération et étant associé directement à la machine à glaçons, **caractérisé en ce que**
le ventilateur associé à la machine à glaçons est conçu de telle manière que son état de fonctionnement est indépendant de l'état de fonctionnement de l'appareil de réfrigération et/ou de congélation, et
l'appareil ne comporte pas de conduit d'air séparé associé à la machine à glaçons, et
des moyens sont prévus, au moyen desquels le niveau de remplissage dans la machine à glaçons ou dans un récipient à glaçons peut être détecté, et
la vitesse de rotation et/ou le facteur de marche du ventilateur associé à la machine à glaçons dépend du niveau de remplissage mesuré.

2. Appareil de réfrigération et/ou de congélation selon la revendication 1, **caractérisé en ce que** l'appareil comporte un évaporateur dynamique destiné à réfrigérer l'espace intérieur de l'appareil ou au moins un compartiment de l'appareil, **en ce qu'**un évaporateur associé au circuit d'air de réfrigération est prévu, et **en ce que** le ventilateur associé à la machine à glaçons est conçu de telle manière que son état de fonctionnement est indépendant de l'état de fonctionnement du ventilateur associé au circuit d'air de réfrigération.

3. Appareil de réfrigération et/ou de congélation selon l'une des revendications précédentes, **caractérisé en ce que** l'appareil comporte un compresseur et **en ce que** le ventilateur associé à la machine à glaçons est conçu de telle manière que son état de fonctionnement est indépendant de l'état de fonctionnement du compresseur.

4. Appareil de réfrigération et/ou de congélation selon l'une des revendications précédentes, **caractérisé en ce que** le ventilateur associé à la machine à glaçons est conçu de telle manière qu'il n'est en fonctionnement qu'en cas de besoin.

5. Appareil de réfrigération et/ou de congélation selon l'une des revendications précédentes, **caractérisé en ce que** la machine à glaçons dispose d'un boîtier et **en ce que** le ventilateur associé à la machine à glaçons est disposé sur le boîtier ou fait au moins partiellement partie intégrante du boîtier.

6. Appareil de réfrigération et/ou de congélation selon l'une des revendications précédentes, **caractérisé en ce que** la machine à glaçons et le ventilateur associé à celle-ci forment une unité structurelle.

7. Appareil de réfrigération et/ou de congélation selon l'une des revendications précédentes, **caractérisé en ce qu'**un élément de commande, en particulier une touche, est prévue, qui est conçue de telle manière que, lors de son actionnement, le ventilateur associé à la machine à glaçons est en fonctionnement jusqu'à ce qu'un niveau de remplissage défini soit atteint dans la machine à glaçons ou dans un récipient à glaçons.
